# FASCICULE DE BREVET EUROPEEN

(11) **EP 0 407 296 B1**
(45) Date de publication et mention de la délivrance du brevet: **04.10.1995**
(21) Numéro de dépôt: 90401926.2
(22) Date de dépôt: 03.07.1990
(51) Int. Cl.: G06F 9/44

(54) **Procédé d'assistance pour l'utilisateur d'un système informatique et dispositif pour la mise en oeuvre dudit procédé**
Verfahren zur Unterstützung des Benutzers eines Rechnersystems und Vorrichtung zur Durchführung des besagten Verfahrens
Method to assist the user of a computer system and apparatus for implementing said method

(30) Priorité: 07.07.1989 FR 8909159
(43) Date de publication de la demande: 09.01.1991
(73) Titulaire: BULL S.A., 92800 Puteaux (FR)
(72) Inventeur: Claes, Gérard, F-91480 Quincy Sous Senart (FR)
(74) Mandataire: Colombe, Michel

(56) Documents cités:
- IEEE SOFTWARE, vol. 5, no. 3, mai 1988, pages 50-58; J. AMBRAS et al.:"MicroScope: "An knowledge-based programming environment"
- IEEE 1988 NATIONAL AEROSPACE AND ELECTRONICS CONFERENCE NAECON 1988, vol. 3, PAGES 1065-1069; R.G. MILLS ET AL.: "A USER-ASSISTED GENERIC SYSTEMS ANALYST WORKSTATION (GENSAW)"
- COMMUNICATIONS OF THE ACM, vol. 31, no. 9, septembre 1988, pages 1064-1079; J.M. CARROLL et al.: "Learning by doing with simulated intelligent help"
- IEEE SOFTWARE, vol. 5, no. 3, mai 1988, pages 40-49; G.E. KAISER et al.:"Intelligent assistance for software development and maintenance"
- 1987 IEEE INTERNATIONAL CONFERENCE ON COMPUTER DESIGN: VLSI IN COMPUTERS & PROCESSORS, ICCD'87, pages 398-402;; A. HSU et al.:"HILDA: An integrated system design enviroment"

## Description

L'invention concerne l'exploitation d'un système informatique par son opérateur-utilisateur. A titre indicatif, un système informatique peut être défini par la configuration minimale suivante : une unité centrale, une mémoire centrale, un ou plusieurs périphériques d'entrée et/ou sortie, un système d'exploitation et, au choix de l'utilisateur, un ou plusieurs programme d'application chargés dans le système.

La rapide expansion de l'informatique dans le monde actuel a profondément modifié le profil de l'utilisateur type d'un système informatique. En particulier, au sein des entreprises, les spécialistes chevronnés partagent aujourd'hui l'outil informatique avec un nombre de plus en plus important d'utilisateurs occasionnels travaillant sur des postes du type clavier-écran, le plus souvent localement isolés. Cette situation nouvelle n'est pas sans poser des problèmes de formation pour ces nouveaux utilisateurs, surtout au niveau de leur progression personnelle au-delà de la formation initiale. En effet, les fonctions d'aide incorporées dans certains logiciels d'applications sont beaucoup trop élémentaires et limitées (en général à la fonction aide-mémoire et/ou commentaire) pour apporter une assistance efficace et appropriée à la situation ponctuelle existante lors de leur appel par l'utilisateur.

Le document par J. Ambras et al : "MicroScope: A Knowledge-Based Programming environment", IEEE Software, Vol. 5, N° 3, mai 1988, pages 50 à 58,décrit le logiciel MicroScope d'analyse de programmes, utilisant les techniques des systèmes experts. En particulier, il inclut une base de connaissance comportant des règles, dans laquelle des informations sont capturées qui permettent, par inférence, d'aider les programmeurs à comprendre et modifier les programmes pour une bonne maintenance. De même, dans "A User-assisted Generic Systems Analyst Workstation (GENSAW)" par R. Mills, IEEE 1988 National Aerospace and Electronics Conference NAECON, Vol. 3, pages 1065 à 1069, un autre programme est présenté, spécialisé dans l'analyse de système et autorisant l'utilisateur à développer interactivement les représentations fonctionnelles de système au niveau désiré de décomposition.

L'article "Learning by doing with simulated intelligent help", J. Caroll et al, Communications of the ACM, Vol. 31, N° 9, Septembre 1988, pages 1064 à 1078 enseigne de plus le moyen de simuler une aide intelligente à l'aide d'une base de connaissance formée de treize message, pour un logiciel de gestion de base de données.

L'inconvénient de ces systèmes est qu'ils ne s'appliquent qu'à des problèmes très spécifiques, dans le cadre d'une seule application donnée. Il est donc difficile de gérer, dans un système informatique, une aide qui soit adaptée à une pluralité d'applications disponibles.

L'invention selon les revendications 1 et 18 a pour objet un ensemble d'aide et de services mis à la disposition de l'utilisateur d'un système informatique pour placer ce dernier dans un environnement de travail assisté par ordinateur tant dans le cadre du système d'exploitation que dans le cadre des applications en service.

Selon l'invention, le procédé d'élaboration d'un système d'assistance pour l'utilisateur d'un système informatique est caractérisé en ce qu'on regroupe dans un système d'aide global une pluralité de systèmes de services spécialisés interconnectés à une interface ayant des analyseurs, des émetteurs, qui sont utilisés par les moteurs de service pour envoyer des informations soit vers l'application en cours APP, soit vers le système informatique, soit vers l'utilisateur, et des capteurs, qui transmettent au moteur de service en opération des informations sur les interactions utilisateurs/applications, détectant et enregistrant les actions de l'utilisateur et l'interaction avec la base de données de l'application et traitant les événements récoltés à travers l'interface par au moins un système de service spécialisé, l'interface étant connectée directement au niveau du système d'exploitation pour permettre l'intégration virtuelle du système d'aide global dans le système d'exploitation gérant les informations d'entrées et les interactions utilisateurs et application dans un mode capteur et les sorties en mode émetteur et envoyant les informations de l'utilisateur ou l'application du système informatique à un système de service spécialisé, chaque système de service spécialisé comportant un moteur de service tel qu'un moteur d'inférence ou un interpréteur et au moins une base de données incorporant une base de faits.

Selon un premier mode de mise en ouvre du procédé selon l'invention, les systèmes de services et l'interface sont interconnectés en étoile avec un système noyau.

Selon un second mode de mise en ouvre du procédé selon l'invention, les systèmes de services sont interconnectés en réseau bouclé, un des systèmes de services assurant par priorité la liaison avec ladite interface.

Selon une variante des modes de mise en oeuvre du procédé selon l'invention, les systèmes de services comportent au moins une base de données commune qui est disponible pour chacun des moteurs de service et du type base de connaissances.

Selon une autre variante des modes de mise en oeuvre du procédé selon l'invention, la base de données comporte une base de données unitaire composée d'une pluralité de bases de connaissances générales unitaires spécifique pour chacun des moteurs de services.

Avantageusement dans la première variante, au moins une base de connaissances, de préférence une base de connaissances commune, comporte une base de connaissances descriptive utilisateur et/ou une base de connaissances descriptive système.

Selon une autre variante des modes de mise en oeuvre du procédé selon l'invention, celui-ci comprend l'étape d'envoyer l'information au moteur de service en fonctionnement et à la base de faits.

Selon encore une autre variante des modes de mise en oeuvre du procédé selon l'invention, I'implémentation active du système d'aide global est obtenu soit par appel ponctuel de l'utilisateur soit par un déclenchement automatique par détection d'événements après la mise en veille du système d'aide global.

Par ailleurs, selon un autre mode de mise en oeuvre du procédé selon l'invention, les moteurs de service sont spécialisés en terme de fonctions principales et sont sélectionnées en particulier parmi les suivantes :
- administration du système informatique,
- enseignement ou autoformation,
- aide à la résolution d'incidents.

Selon une variante de ces modes de mise en oeuvre du procédé selon l'invention, les moteurs de services sont du type multitâches, de préférence à fonctionnement bouclé.

Selon une autre variante des modes de mise en oeuvre du procédé selon l'invention, la base de connaissances descriptive de l'utilisateur comporte les informations suivantes :
- identité de l'utilisateur,
- profil de l'utilisateur tel que son cursus,
- expérience de l'utilisateur vis-à-vis du système et/ou de l'application,
- objectif pour l'autoformation,
- tâches qu'il entend réaliser.

Selon encore une autre variante des modes de mise en oeuvre du procédé selon l'invention, la base de connaissances descriptive sur le système comporte des informations sur la configuration du système, sur chaque application, sur l'environnement extérieur du système tel que bruit, luminosité de la pièce, sur les événements précédents et sur les opérations précédentes.

Selon une autre variante des modes de mise en oeuvre du procédé selon l'invention, la base de faits comporte les informations suivantes :
- événements résultant de l'interaction entre l'utilisateur, l'application et/ou le système de service.

Selon encore une autre variante des modes de mise en oeuvre du procédé selon l'invention, celui-ci comporte des bases de connaissances actives et réactives constituées par des fonctions, règles ou méthodes exécutées comme une fonction de l'état des bases de connaissances descriptives et factuelles.

Ainsi donc le procédé selon l'invention, dans ses variantes ci-dessus, permet :
1/ de détecter les actions de l'utilisateur (au clavier et/ou à l'écran), ses réactions (erreurs, hésitations, ...) et les interactions au niveau des applications en service (ouverture d'un fichier, ordre d'impression, ...);
2/ de connaître et de faire une description du contexte général sur l'utilisateur et/ou sur l'environnement système tant dans le temps que dans l'espace;
3/ de traiter les événements recueillis au travers de l'interface en fonction des attentes de l'utilisateur (appel à l'aide, recherche d'incident) et/ou automatiquement à partir de la détection d'événements particuliers (erreurs graves, incidents, ...);
4/ de mémoriser les interactions pertinentes afin d'offrir à l'utilisateur des aides personnalisées en fonction de lui-même et/ou de l'environnement.

Selon d'autres modes de mise en oeuvre du procédé selon l'invention, le système de services spécialisés comprend des moyens pour l'administration de l'environnement informatique, des moyens pour fournir une autoformation à l'utilisateur et/ou des moyens pour résoudre les incidents d'un système par l'utilisateur.

L'invention concerne également un dispositif pour l'élaboration d'un système d'assistance pour l'utilisateur d'un système informatique comportant au moins une unité centrale, une mémoire centrale divisée en une mémoire morte de type ROM et une mémoire vive de type RAM, un ou plusieurs périphériques d'entrée et/ou de sortie, un système d'exploitation, une base de données, un moteur de service et un ou plusieurs logiciels d'application, le dispositif comportant de plus un système d'aide global regroupant une pluralité de systèmes de services spécialisés, des moyens d'interface reliés directement au niveau du système d'exploitation et au système de service pour permettre l'intégration virtuelle du système de service spécialisé dans le système informatique, ledit système de service spécialisé étant réalisé sous la forme d'une carte ou d'un module à microcircuits additionnels comportant au moins un des éléments suivants :
- une mémoire morte programmable (PROM) ou équivalent pour constituer un moteur d'inférence pour un moteur de service,
- une mémoire vive (RAM) ou équivalente pour constituer une base de faits,
- une mémoire vive (RAM) de préférence (CMOS) ou équivalente pour constituer une base de connaissances,
- une partie interface constituée d'une mémoire morte programmable (PROM) ou équivalente et
- des circuits permettant les connections nécessaires vers les périphériques du système,
   la mise en oeuvre du système d'aide global étant réalisée au moyen d'un programme d'initialisation à partir du système d'exploitation lesdits moyens d'interfaces comprenant entre le système de service spécialisé et les dispositifs capteurs du système informatique, les moyens analyseurs pour détecter et enregistrer les actions de l'utilisateur et les moyens émetteurs pour transmettre l'information soit au programme d'application ou au système informatique.

Dans un premier mode de réalisation du dispositif selon l'invention, les moyens d'interfaces sont connectés directement de façon transparente entre l'utilisateur et les programmes d'application au niveau du système d'exploitation, et sont adaptés en mode capteur pour détecter les actions de l'utilisateur et les interactions avec les applications.

Dans une variante de réalisation du dispositif selon l'invention, celui-ci comporte des moyens de traitement auxiliaire central pour gérer certains composants du service spécialisé.

Avantageusement, les dispositifs capteurs connectés à l'interface comprennent un chronomètre et/ou un microphone, les moyens d'analyse comportent un analyseur d'intérêt, un analyseur de perplexité, un analyseur d'espace mémoire et un analyseur de compatibilité et l'interface comporte des émetteurs incluant un générateur de menus, un générateur de fenêtres de traitement d'informations sur l'écran, un générateur d'images stationnaires ou animées sur l'écran, et un générateur de sens.

Selon une autre variante de réalisation du dispositif selon l'invention, les moyens capteurs comportent un ou plusieurs filtres de clavier, un lecteur de mémoire écran, un lecteur de souris, un lecteur de stylo lumineux, un lecteur d'écran tactile, un détecteur de bruit, un capteur photosensitif, un détecteur de pression et un générateur de signaux.

Selon encore une autre variante de réalisation du dispositif selon l'invention, il comporte des moyens pour l'implémentation d'un système d'aide global comportant un noyau pour sélectivement mettre en service les systèmes de services spécialisés et une séquence conçue et arrangée pour qu'après l'initialisation, l'interface transfère la commande à l'un ou l'autre des moteurs de service.

Selon encore une autre variante de réalisation du dispositif selon l'invention, il comporte une base de connaissance descriptive de l'utilisateur et incorporant les informations suivantes :
- identité de l'utilisateur,
- profil de l'utilisateur tel que par exemple son cursus,
- ses acquis vis-à-vis du système et/ou de l'application,
- ses objectifs,
- la tâche qu'il entend réaliser.

Selon encore une autre variante de réalisation du dispositif selon l'invention, il comporte une base de connaissances descriptive du système incluant les informations sur la configuration du système sur chaque application, sur l'environnement externe du système tel que le bruit, la luminosité de la pièce, sur les événements aux faits antérieurs et sur les opérations précédentes.

Selon encore une autre variante de réalisation du dispositif selon l'invention, il comporte une base de données factuelles ayant les informations suivantes :
- les événements résultant de l'interaction entre l'utilisateur, l'application et/ou le système de service.

Selon encore une autre variante de réalisation du dispositif selon l'invention, il comporte une base de connaissances active et réactive constituée par des fonctions, des règles et des méthodes exécutées comme une fonction de l'état, la base de connaissances descriptive et de la base de connaissances factuel.

Selon encore une autre variante de réalisation du dispositif selon l'invention, le système d'aide global est réalisé sous la forme d'un microcircuit comportant au moins un des éléments suivants :
- une mémoire morte programmable (PROM) ou équivalente pour constituer un moteur d'inférence de moteur de service,
- une mémoire vive (RAM) de préférence CMOS ou équivalente pour constituer une base de connaissances,
- une mémoire vive (RAM) pour constituer une base de faits,
- une partie interface constituée d'une mémoire morte programmable (PROM) ou équivalente et des circuits permettant les connections nécessaires vers les périphériques du système,
   et des moyens pour la mise en oeuvre du système d'aide global réalisés au moyen d'un programme d'initialisation à partir du système d'exploitation (OS).

Avantageusement, il comporte une unité centrale auxiliaire, par exemple à microprocesseurs, pour contrôler certains composants du système d'aide global et/ou des capteurs physiques additionnels tels que chronomètre et/ou microphone.

L'invention est maintenant décrite en référence aux dessins ci-annexés dans lesquels :
- la figure 1 représente un système informatique classique sur lequel le procédé selon l'invention est susceptible d'être mis en oeuvre,
- la figure 2 représente un schéma de principe illustrant le procédé d'assisteance selon l'invention,
- et la figure 3 représente le schéma synoptique de déroulement d'un système d'aide global conforme au procédé d'assistance selon l'invention.

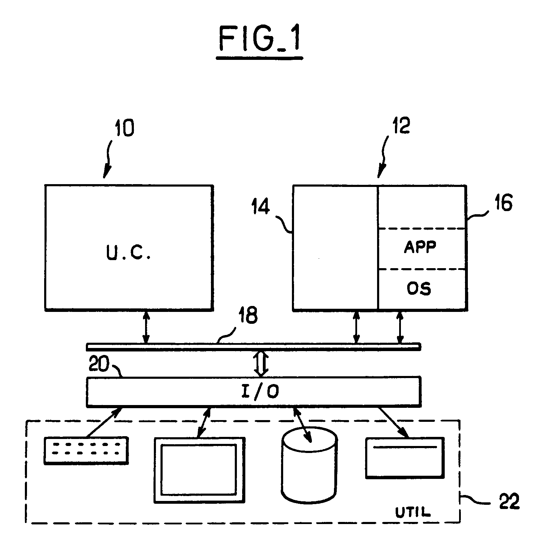

Le système informatique représenté sur la figure 1 d'architecture classique unitaire comporte une unité centrale (U. C.) 10 et une mémoire centrale 12, elle-même divisée en mémoire morte (ROM) 14 et mémoire vive (RAM) 16, convenablement reliées par un bus de communication interne 18. Le sous-système central (10, 12) du système informatique communique avec un ensemble de périphériques d'entrée et/ou de sortie (UTIL) accessibles à l'utilisateur-opérateur du système par une unité d'entrée/sortie (I/O) 20 connectée au bus 18. A titre d'exemple non limitatif ont été représentés pour constituer l'ensemble (UTIL) quatre périphériques-types plus particulièrement un clavier 22 (entrée), un écran 24 (entrée/sortie), une unité de mémoire auxiliaire à disque (entrée/sortie) 26 et une imprimante 28 (sortie).

De façon tout aussi classique, la gestion des périphériques d'entrée et de sortie est assurée par un ensemble de programmes appelé système d'exploitation OS convenablement chargé en mémoire vive 16 à l'aide de programmes d'initialisation résidant en mémoire morte 14. Sont également chargés en mémoire vive un ou plusieurs programmes d'application APP susceptibles d'être exécutés en mode unitaire ou en mode simultané selon les caractéristiques du système. En tout état de cause, l'ensemble des intéractions INTER entre l'utilisateur (les périphériques UTIL) et le programme d'application (APP) est géré par le système d'exploitation (OS).

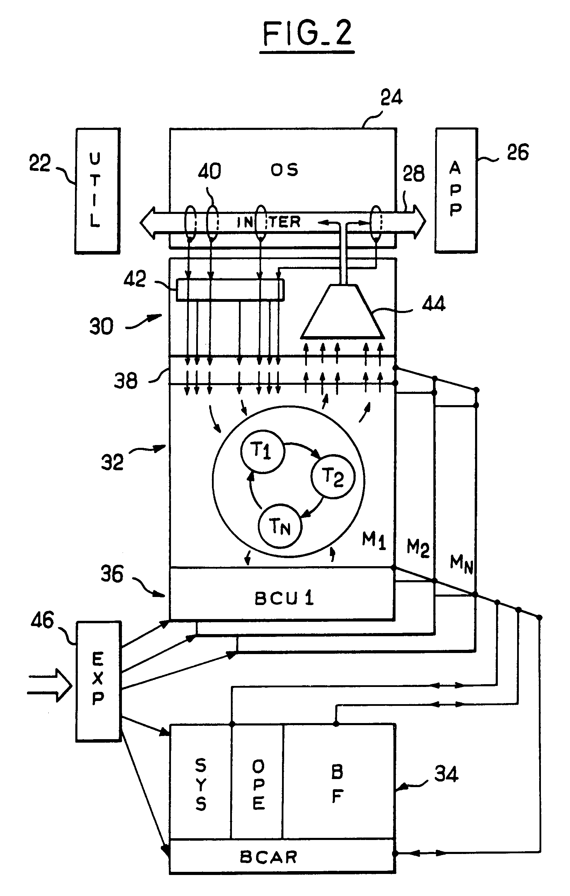

La figure 2 montre le schéma de principe illustrant le procédé d'assistance selon l'invention.

A la partie supérieure de la figure 2, on a représenté les trois blocs-diagrammes UTIL 22, OS 24 et APP 26 en tant qu'éléments du système informatique décrit ci-dessus. De plus l'ensemble des intéractions entre l'utilisateur, en fait les périphériques UTIL 22, et le programme d'application APP 26 transite par le canal INTER (représenté par la double flèche 28), partie intégrante du système d'exploitation OS 24.

Le système d'aide global selon l'invention présente trois sous-ensembles principaux qui ont une interface 30, une partie traitement avec une pluralité de moteurs de service 32 et une partie expertise constituée par un groupe de bases de données lui-même divisé en base de données commune 34 (incorporant entre autres une base de faits) et en bases de données unitaires 36. Les moteurs de service 32 et les bases de données constituent un groupe de systèmes de service spécialisés détaillés ci-après dont la mise en service sélective est controlée par un système-noyau 38. Un système de service est ainsi défini par l'association d'un moteur d'inférences ou d'un interprétateur avec une base de connaissances et une base de faits.

L'interface 30 est située au niveau du système d'exploitation OS et est en relation directe avec celui-ci. Son rôle est double :
1. Mode capteur : Transmettre au moteur de service en opération des informations sur les interactions utilisateur/applications.
2. Mode émetteur : Emettre les informations provenant du moteur de service en direction de l'utilisateur UTIL ou des applications APP (par exemple pour effectuer une démonstration directement dans une application).

L'interface est particulièrement utile pour normaliser les échanges entre l'utilisateur, les applications, les autres éléments constitutifs du système informatique et le système d'aide global.

Du point de vue structurel, l'interface est constituée par des capteurs 40 associés ou non à des analyseurs 42 et par des émetteurs 44. Les capteurs 40 se composent de circuits et routines placés entre certains constituants du système informatique et les moteurs de service 32, par exemple : un filtre de clavier, un lecteur de mémoire-écran, un lecteur de souris, un lecteur de stylo lumineux, un lecteur d'écran tactile. Bien que non représentés sur la figure 2, certaines variantes de l'invention utilisent également des capteurs physiques extérieurs au système informatique tels que des détecteurs de bruit, des capteurs photo-sensibles, des chronomètres, des détecteurs de pression, des générateurs de signaux (par exemple un générateur de variables aléatoires).

A partir des informations de base provenant des capteurs, des informations plus évoluées sont élaborées par les analyseurs 42. Ces derniers sont en général de type programmé et ont pour but de générer des informations plus intelligibles pour les moteurs de service. Selon la spécialisation des moteurs de service, il est possible de proposer un ensemble d'analyseurs le plus approprié. Par exemple il peut être intéressant de recueillir des informations tant sur le comportement de l'utilisateur (analyseur d'intérêt ou analyseur de perplexité) que sur l'état de l'application en cours (analyseur d'espace mémoire disponible, analyseur de compatibilité du système avec certaines opérations de l'application).

Les émetteurs 44 sont utilisés par les moteurs de service 32 pour envoyer des informations soit vers l'application en cours APP, soit vers le système informatique, soit vers l'utilisateur. On peut citer par exemple des générateurs de menus, des générateurs de fenêtres informatiques sur écran, des générateurs d'images fixées ou animées à l'écran et des générateurs de son.

La partie traitement est constituée du système-noyau 38 sur lequel sont interconnectés en étoile les systèmes de service, en fait les moteurs de service correspondants 32. Le système-noyau 38 est structuré autour d'un séquenceur qui après avoir initialisé les éléments de l'interface 30 passe le contrôle à tel ou tel moteur de service (M1 à MN) en fonction des besoins reconnus.

D'une façon générale, un moteur de service Mi est constitué d'un ensemble de systèmes logiciels, dont des moteurs d'inférences (T1 à TN) dont chacun est destiné à résoudre une tâche. Plus particulièrement, les tâches sont choisies pour chaque moteur Mi à partir des tâches de base de l'expert correspondant. Par exemple, un moteur de service de résolution d'incident est chargé de traiter les tâches de base d'un ingénieur de maintenance et est constitué d'autant de systèmes élémentaires que de tâches de base pour la maintenance. Ou encore, un moteur d'enseignement doit remplir les quatre tâches principales d'un enseignant : la planification pédagogique, l'enseignement proprement dit, la direction des exercices et le contrôle des connaissances. Le détail des divers services intégrés dans le système d'aide global conforme au procédé d'assistance selon l'invention sera donné à titre d'exemple non limitatif lors la description de la mise en oeuvre de ce même système d'aide global.

D'une façon générale, la partie expertise rassemble un ensemble de connaissances sur l'utilisateur, sur les savoirs des experts, sur le système informatique en général, sur les applications particulières, etc... consignées dans une base de données. Cette base de données peut être spécifique au système d'aide global mais peut également utiliser des bases de données existantes pour autant qu'elles acceptent des descriptions de type objet/attribut et que leurs mises à jour restent brèves pour ne pas gêner le déroulement des aides en temps réel.

Cette base de données est structurée en une base de données commune 34 à tous les moteurs de service et en une base de données unitaire 36 composée pour l'essentiel d'une pluralité de bases de connaissances générales unitaires BCU spécifiques pour chacun des moteurs de service auxquels elles sont appariées (M1/BCU1 à MN/BCUN).

Les bases de connaissances générales unitaires sont constituées de notions, des caractéristiques associées à ces notions et des actions relatives. Ces connaissances sont en général repertoriées selon chaque service concerné par exemple des connaissances didactiques pédagogiques pour l'autoformation, des connaissances d'expert en maintenance pour la résolution d'incident. En particulier, dans le cadre de la base de connaissances unitaire associée au moteur d'autoformation, il est possible de définir :
- une notion : touches numériques du clavier,
- ses caractéristiques : moyens d'accès, effets de l'activation de ces touches, niveau nécessaire à l'utilisateur pour apprendre le mode opératoire de ces touches, etc.,
- ses actions : moyens d'enseigner le mode opératoire de ces touches, exercices relatifs à cet enseignement.

De plus, les bases de connaissances générales unitaires peuvent également comporter des règles opératoires, par exemple : Ne pas procéder à l'enseignement du mode opératoire des touches de fonction F1/F10 avant d'avoir vérifié leur compatibilité avec l'application en cours.

A côté de ces bases de connaissances unitaires, coexiste une base de connaissances commune à tous les moteurs de service. Cette base commune est elle-même divisée en une base de connaissances descriptives sur l'utilisateur (base OPE) et une base de connaissances descriptives sur le système (base SYS). Ces connaissances sont répertoriées en mémoire par des descriptions selon une structure connue dans les langages orientés-objet.

La base de connaissances OPE comporte en premier lieu des connaissances descriptives sur l'utilisateur-opérateur, par exemple :
- son identité,
- son profil d'utilisateur (y compris son cursus d'utilisateur de système informatique),
- ses acquis vis à vis du système et/ou de l'application (pour l'autoformation),
- ses objectifs (pour l'autoformation),
- la tâche qu'il entend réaliser (pour l'aide contextuelle).

La base de connaissances descriptives SYS, concerne des connaissances sur la configuration du système, des connaissances sur chaque application APP susceptible d'être utilisée par l'utilisateur, des connaissances sur l'environnement extérieur au système (bruit, luminosité, etc), des connaissances sur des faits ou évènements antérieurs, précédentes opérations, etc...

Les bases de connaissances descriptives orientées vers la connaissance de l'utilisateur et/ou du système, mises à jour en permanence et accessibles à tous les moteurs de service, améliorent très sensiblement les performances du système d'aide global par rapport à un système-expert classique.

Le système d'aide global comporte également une base de faits BF disponible pour tous les moteurs de service, soit par partage complet, soit par transfert d'un système de service intégré à un autre suivant les besoins. Ces faits sont constitués par les évènements résultant des intéractions entre l'utilisateur, les applications et/ou les systèmes de service. Par exemple, une erreur dans un exercice, une réponse de l'utilisateur face à une question du service de résolution d'incident, la création d'une fiche pour une application, etc.. Il est à noter toutefois que sans sortir du cadre de l'invention, des bases de faits unitaires sont associées aux bases de connaissances unitaires. Cette possibilité est laissée au choix du concepteur du système d'aide global en fonction de la spécificité de chaque moteur de service.

Enfin, le système d'aide global comporte une base de connaissances actives et réactives. Ce sont des connaissances provenant de différents experts telles que fonctions, règles ou méthodes et qui s'exécutent en fonction de l'état des connaissances descriptives et factuelles. Par exemple :
"SI la configuration imprimante ETAIT connue du système (connaissance descriptive) ET SI l'imprimante est muette (fait) ALORS chercher le problème côté imprimante."
Ou encore :
"SI clavier ETAIT connu (connaissance descriptive) ET ERREUR (touches de déplacement) > ERREUR MAX ALORS clavier sera à revoir."

Associé à toutes les connaissances détaillées ci-dessus, un intégrateur de connaissances EXP 46 permet de rentrer des connaissances par les experts dans la base de données.

Il ressort de ce qui précède que la mise en oeuvre du procédé selon l'invention peut être effectuée au moyen d'un dispositif adéquat par association d'un système informatique classique (matériel et logiciel) avec un système d'aide global du type présenté ci-dessus intégrant notamment des logiciels appropriés. Toutefois, la réalisation dans le cadre de l'invention de tout ou partie du système d'aide global sous la forme d'une carte ou d'un module à micro-circuit contenant un ou plusieurs sous-systèmes de service est susceptible d'apporter des avantages intéressants, notamment :
- la possibilité, en ajoutant une unité centrale auxiliaire par exemple un micro-processeur, de libérer du temps machine sur le système informatique hôte,
- la possibilité, en ajoutant de la mémoire auxiliaire, de ne pas prendre de la place en mémoire centrale, (ceci est important pour certaines applications par exemple du type à environnement graphique qui occupent un large espace de mémoire),
- et la possibilité de rajouter des capteurs physiques sur la carte, tels que des microphones, et des chronomètres, etc...

Dans une variante de réalisation d'un dispositif pour la mise en oeuvre du procédé selon l'invention, la carte additionnelle comporte au moins un des éléments suivants :
- une mémoire morte programmable (PROM) ou équivalente pour constituer un moteur d'inférences de moteur de service,
- une mémoire vive (RAM) de préférence CMOS ou équivalente pour constituer une base de connaissances,
- une mémoire (vive) RAM ou équivalente pour constituer une base de faits,
- une partie interface constituée d'une mémoire morte programmable (PROM) ou équivalente et des circuits permettant les connections nécessaires vers les périphériques du système.
   Il est de plus prévu un programme d'initialisation de la carte à partir du système d'exploitation.

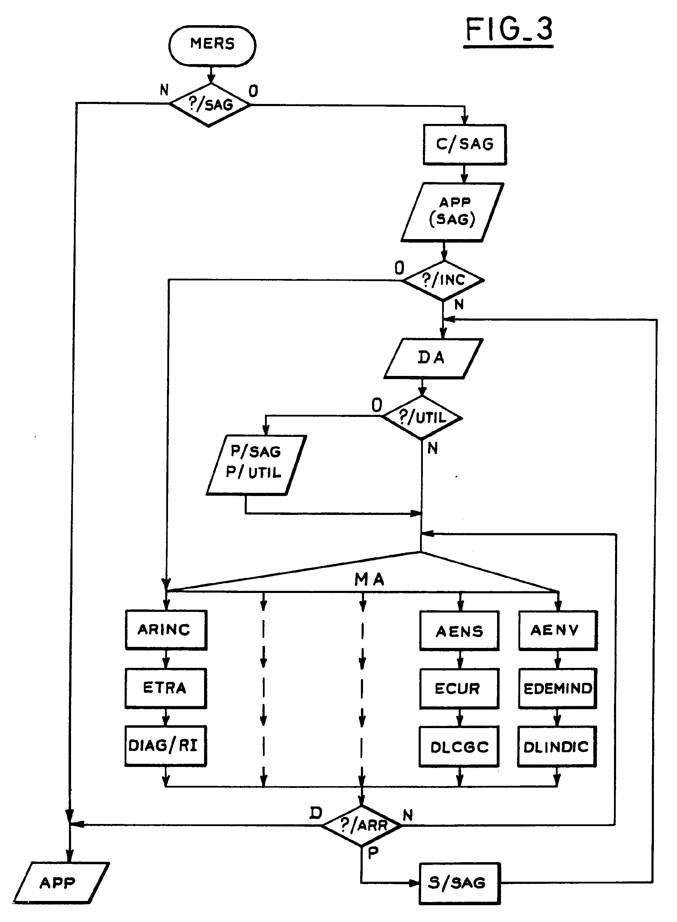

Pour terminer la présentation de l'invention, le déroulement de la mise en oeuvre d'un système d'aide global conforme au procédé d'assistance selon l'invention est maintenant décrit en se référant au synoptique illustré à la figure 3.

Après la mise en route du système informatique (MERS), l'utilisateur a le choix (?/SAG) d'utiliser ou non le système d'aide global SAG. En cas de refus (sortie N), l'utilisateur travaillera sur les applications courantes (APP) après chargement approprié en mémoire centale. L'application APP peut être de façon classique un traitement de texte, un tableur, un système de gestion de base de données, etc, y compris le système d'exploitation lui-même dans sa fonction application. Le choix de l'utilisation du système d'aide global (sortie O), entraînera automatiquement le chargement en mémoire centrale du système d'aide global SAG en l'intégrant virtuellement au système d'exploitation OS. Dans ce premier état, le système SAG n'est pas visible pour l'utilisateur, mais son interface filtre toutes les informations générées par les périphériques d'entrée (clavier, souris...). L'utilisateur est alors en mesure de travailler sur les applications courantes (APP/SAG) comme dans le cas précédent. Toutefois, le système SAG comporte une veille automatique à la venue des incidents (?/INC) avec, en cas de détection d'incident (sortie O), un branchement direct par son moteur de service sur le système de service "Aide à la résolution d'incident (ARINC)" qui sera présenté ci-après.

En l'absence d'incident, (sortie N) la mise en oeuvre véritablement active du système SAG se fait par appel ponctuel d'aide (DA) par l'utilisateur, par exemple en enfonçant la touche (F1 à FN) de fonction correspondante affectée par le système d'exploitation (OS) ou encore par la sélection d'une rubrique "aide" dans un sous-menu.

A ce stade, le système SAG déclenche une procédure d'accueil d'identification de l'utilisateur (branchement ?/UTIL) en demandant à ce dernier de composer son code d'accès au système SAG. Si l'utilisateur est connu (sortie N), le menu des aides (MA) apparaîtra de suite, à l'inverse si l'utilisateur est inconnu (sortie O), le système SAG se présente à l'utilisateur (P/SAG) et demande à ce dernier de se présenter (P/UTIL) en répondant à quelques questions. A l'issue de ces présentations, le système se rebranche sur le menu des aides (MA).

Dans le système d'aide global ici présenté à titre d'exemple non limitatif de la mise en oeuvre de l'invention, le menu des aides (MA) comporte une pluralité de rubriques correspondant chacune à un système de service spécialisé y compris le système d'aide à la résolution d'incident "ARINC" déjà mentionné. La figure 5 montre le détail de trois systèmes de service, toutefois le système d'aide global peut incorporer d'autres systèmes de service dont deux sont représentés schématiquement sur la figure 5 par deux lignes de tirets fléchés. En fonction du choix de l'utilisateur, le moteur de service concerné Mi et sa base de connaissance unitaire BCUi vont être chargés en mémoire de travail. L'utilisateur se retrouve alors face à un service intégré particulier adapté à son besoin présent.

Trois services intégrés disponibles sont maintenant donnés à titre d'exemple non limitatifs :
1/ Aide à l'administration de l'environnement informatique (AENV) :
   Ce service a pour objectif de fournir à l'utilisateur les moyens de gérer correctement son environnement informatique de travail.
   Après étude de la demande d'indication (procédure EDEMIND), le service qui comporte un moteur à deux tâches délivre (procédure DLIND) des indications sur :
   - la gestion du système par présentation de tableaux et d'indicateurs sur le trafic d'informations dans le système et sur les performances de ce dernier,
   - la gestion des commandes par mise à la disposition de l'utilisateur d'un sous-système AGENT permettant de créer des suites de commandes enchaînées, par exemple des macro-instructions. Ces suites peuvent ête appelées ou déclenchées automatiquement à l'apparition d'une configuration prédéfinie (frappe de touches, mot sur écran, etc...).
2/ Aide à l'enseignement ou autoformation (AENS) :
   Ce service a pour objectif de fournir à l'utilisateur une autoformation personnalisable sur une application. Il est du type à quatre tâches à fonctionnement bouclé et comporte un gestionnaire pédagogique, un système instructeur, un système entraîneur et un système niveau. Le gestionnaire pédagogique traite de la planification du cursus de l'utilisateur (procédure ECUR). C'est essentiellement un moteur d'inférences qui, compte tenu des expertises des bases de connaissances et des informations provenant de l'utilisateur, va choisir les enseignements à dispenser.
   Le système instructeur traite de l'organisation d'un enseignement. Il est indifféremment constitué d'un interpéteur qui exécute les instructions dans l'ordre où l'expert enseignant les a préparées ou d'un moteur d'inférences structuré pour résoudre la même tâche.
   Le système entraineur s'occupe de diriger l'utilisateur durant les exercices, en particulier de suivre l'utilisateur et de lui fournir des suggestions pour le guider vers une solution.
   Enfin, le système traite du contrôle de l'utilisateur et de son suivi. Il est réalisé grâce à un système expert qui intègre les évènements pertinents des enseignements qui viennent de se dérouler dans la base de connaissances sur l'utilisateur (base OPER). Ces trois derniers systèmes sont désignés dans la figure 3 par la procédure DLCGC (Cours, Guidage, Contrôle).
3/ Aide à la résolution d'incidents (ARINC) :
   En cas d'incident sur un poste de travail, ce service a pour but de fournir les premières indications permettant à l'utilisateur de remédier au problème.
   Ce service est accompagné d'un document papier pour permettre la mise en état minimum du système (unité centrale, mémoire centrale, clavier, écran).
   A l'aide d'indications provenant des traces des capteurs sur les périphériques, complétées par des questions à l'utilisateurs (procédure ETRA), le service recherche dans sa base de connaissances les éléments d'une solution et propose des conduites à tenir (procédure DIAG/RI) allant de la remise en service opérationnel du système avec son application en cours à des autres actions à entreprendre (sauvegarde, etc).

Lorsque la demande de service est finie d'être traitée, l'utilisateur par le branchement d'arrêt (?/ARR) à le choix de rester dans le système d'aide SAG (sortie N) et faire appel à un autre service, de sortir provisoirement du système (sortie P) ou de quitter définitivement le système d'aide (sortie D) vers l'application APP. En cas de sortie provisoire P, le menu d'aide MA est supprimé par la procédure (S/SAG) puis le système se met en état de veille par branchement en amont de la procédure demande d'aide DA. Dans cet état de veille, le système d'aide global SAG est de nouveau transparent pour l'application APP, malgré la poursuite de la collecte d'informations présélectionnées par les filtres et les divers capteurs du système d'aide.

Bien évidemment l'invention n'est pas limitée aux services intégrés ici présentés et couvre en particulier d'autres services d'aide, par exemple d'aide générale pour l'utilisateur, d'aide contextuelle plus proche de l'application au cours de l'utilisation et d'aide au développement de compétences de l'utilisateur, sans oublier d'autres services spécialisés plus orientés vers d'autres types d'applications susceptibles d'être utilisées par l'opérateur, par exemple : communications, applications mathématiques et/ou graphiques, édition, traductions, contrôles de processus industriels, etc.. .

Par ailleurs, dans un autre mode de mise en oeuvre du procédé selon l'invention, les divers systèmes de service sont interconnectés en réseau bouclé, un des systèmes assurant par priorité la liaison avec l'interface avant de passer la main à celui des autres systèmes de service plus particulièrement concernés.

## Revendications

1. Procédé d'élaboration d'un système d'assistance pour l'utilisateur d'un système informatique du type comportant une unité centrale (10), une mémoire centrale (12), un ou plusieurs périphériques d'entrée et/ou de sortie (22), un système d'exploitation (OS), une base de données, au moins un moteur de service et de façon optionnelle un ou plusieurs logiciels d'application (APP), le procédé étant caractérisé en ce qu'on regroupe dans un système d'aide global une pluralité de systèmes de services spécialisés (32,34,36) interconnectés à une interface (30) ayant des analyseurs (42), des émetteurs (44), qui sont utilisés par les moteurs de service (32) pour envoyer des informations soit vers l'application en cours APP, soit vers le système informatique, soit vers l'utilisateur, et des capteurs (40), qui transmettent au moteur de service en opération des informations sur les interactions utilisateurs/applications, détectant et enregistrant les actions de l'utilisateur et l'interaction avec la base de données de l'application et traitant les événements récoltés à travers l'interface par au moins un système de service spécialisé, l'interface étant connectée directement au niveau du système d'exploitation (OS) pour permettre l'intégration virtuelle du système d'aide global dans le système d'exploitation (OS) gérant les informations d'entrées et les interactions utilisateurs et application dans un mode capteur et les sorties en mode émetteur et envoyant les informations de l'utilisateur ou l'application du système informatique à un système de service spécialisé, chaque système de service spécialisé comportant un moteur de service (M1-MN) tel qu'un moteur d'inférence ou un interpréteur et au moins une base de données (36, BCAR, SYS, OPE) incorporant une base de faits (BF).

2. Procédé selon la revendication 1 caractérisé en ce que les systèmes de services (32,34,36) et l'interface (30) soit interconnectés en étoile avec un système noyau (38).

3. Procédé selon la revendication 1 caractérisé en ce que les systèmes de services sont interconnectés en réseau bouclé avec un des systèmes de services assurant par priorité la liaison avec ladite interface.

4. Procédé selon une des revendications précédentes, caractérisé en ce que les systèmes de services comportent au moins une base de données commune (34) qui est disponible pour chacun des moteurs de service (M1) et du type base de connaissances (BCAR, SYS, OPE).

5. Procédé selon une des revendications précédentes, caractérisé en ce que la base de données comporte une base de données unitaire composée d'une pluralité de bases de connaissances générales unitaires (BCU) spécifique pour chacun des moteurs de services.

6. Procédé selon la revendication 4, caractérisé en ce qu'au moins une base de connaissances, de préférence une base de connaissances commune comporte une base de connaissances descriptive utilisateur (OPE) et/ou une base de connaissances descriptive système (SYS).

7. Procédé selon une des revendications précédentes, caractérisé en ce qu'il comprend l'étape d'envoyer l'information au moteur de service (M1) en fonctionnement et à la base de faits (BF).

8. Procédé selon une des revendications précédentes, caractérisé en ce que l'implémentation active du système d'aide global est obtenu soit par appel ponctuel de l'utilisateur soit par un déclenchement automatique par détection d'événements après la mise en veille du système d'aide global.

9. Procédé selon une des revendications précédentes, caractérisé en ce que les moteurs de service (M1, MN) sont spécialisés en terme de fonctions principales et sont sélectionnées en particulier parmi les suivantes :
- administration du système informatique,
- enseignement ou autoformation,
- aide à la résolution d'incidents.

10. Procédé selon une des revendications 1,4,7, caractérisé en ce que les moteurs de services sont du type multitâches (T1-TN), de préférence à fonctionnement bouclé.

11. Procédé selon la revendication 6 caractérisé en ce que la base de connaissances descriptive de l'utilisateur comporte les informations suivantes :
- identité de l'utilisateur,
- profil de l'utilisateur tel que son cursus,
- expérience de l'utilisateur vis-à-vis du système et/ou de l'application,
- objectif pour l'autoformation,
- tâches qu'il entend réaliser.

12. Procédé selon la revendication 6 caractérisé en ce que la base de connaissances descriptive sur le système (SYS) comporte des informations sur la configuration du système, sur chaque application, sur l'environnement extérieur du système tel que bruit, luminosité de la pièce, sur les événements précédents et sur les opérations précédentes.

13. Procédé selon la revendication 1 ou 7 caractérisé en ce que la base de faits comporte les informations suivantes :
- événements résultant de l'interaction entre l'utilisateur, l'application et/ou le système de service.

14. Procédé selon une des revendications 4,6,7,9 à 13, caractérisé en ce qu'il comporte des bases de connaissances actives et réactives (BCAR) constituées par des fonctions, règles ou méthodes exécutées comme une fonction de l'état des bases de connaissances descriptives (OPE, SYS) et factuelles (BF).

15. Procédé selon la revendication 1 caractérisé en ce que le système de service spécialisé comprend des moyens (AENV) pour l'administration de l'environnement informatique.

16. Procédé selon la revendication 1 caractérisé en ce que le système de service spécialisé comporte des moyens (AENS) pour fournir une autoformation à l'utilisateur.

17. Procédé selon la revendication 1 caractérisé en ce que le système de service spécialisé comporte des moyens (ARINC) pour résoudre les incidents d'un système par l'utilisateur.

18. Dispositif pour l'élaboration d'un système d'assistance pour l'utilisateur d'un système informatique comportant au moins une unité centrale (10), une mémoire centrale (12) divisée en une mémoire morte de type ROM (14) et une mémoire vive de type RAM (16), un ou plusieurs périphériques d'entrée et/ou de sortie (22), un système d'exploitation (OS), une base de données, un moteur de service et un ou plusieurs logiciels d'application (APP), le dispositif étant caractérisé en ce qu'il comporte de plus un système d'aide global regroupant une pluralité de systèmes de services spécialisés (32,34,36), des moyens d'interface (30) reliés directement au niveau du système d'exploitation (OS) et au système de service pour permettre l'intégration virtuelle du système de service spécialisé dans le système informatique, ledit système de service spécialisé est réalisé sous la forme d'une carte ou d'un module à microcircuits additionnels comportant au moins un des éléments suivants :
- une mémoire morte programmable (PROM) ou équivalent pour constituer un moteur d'inférence pour un moteur de service,
- une mémoire vive (RAM) ou équivalente pour constituer une base de faits,
- une mémoire vive (RAM) de préférence (CMOS) ou équivalente pour constituer une base de connaissances,
- une partie interface constituée d'une mémoire morte programmable (PROM) ou équivalente et
- des circuits permettant les connections nécessaires vers les périphériques du système,
la mise en oeuvre du système d'aide global étant réalisée au moyen d'un programme d'initialisation à partir du système d'exploitation (OS) lesdits moyens d'interfaces comprenant entre le système de service spécialisé et les dispositifs capteurs (40) du système informatique, les moyens analyseurs (42) pour détecter et enregistrer les actions de l'utilisateur et les moyens émetteurs (44) pour transmettre l'information soit au programme d'application ou au système informatique.

19. Dispositif selon la revendication précédente caractérisé en ce qu'au niveau du système d'exploitation (OS), les moyens d'interfaces sont connectés directement de façon transparente entre l'utilisateur et les programmes d'application (APP) et sont adaptés en mode capteur pour détecter les actions de l'utilisateur et les interactions avec les applications (APP).

20. Dispositif selon la revendication précédente caractérisé en qu'il comporte des moyens de traitement auxiliaire central pour gérer certains composants du service spécialisé.

21. Dispositif selon la revendication 18 ou 19 caractérisé en que les dispositifs capteurs connectés à l'interface comprennent un chronomètre.

22. Dispositif selon la revendication 18 ou 19 caractérisé en que les dispositifs capteurs comprennent un microphone.

23. Dispositif selon la revendication 18 caractérisé en que les moyens d'analyse comportent un analyseur d'intérêt, un analyseur de perplexité, un analyseur d'espace mémoire et un analyseur de compatibilité.

24. Dispositif selon la revendication 18 caractérisé en que l'interface comporte des émetteurs incluant un générateur de menus, un générateur de fenêtres de traitement d'informations sur l'écran, un générateur d'images stationnaires ou animées sur l'écran, et un générateur de sens.

25. Dispositif selon la revendication 18 ou 19 caractérisé en que les moyens capteurs comportent un ou plusieurs filtres de clavier, un lecteur de mémoire écran, un lecteur de souris, un lecteur de stylo lumineux, un lecteur d'écran tactile, un détecteur de bruit, un capteur photosensitif, un détecteur de pression et un générateur de signaux.

26. Dispositif selon la revendication 18 ou 19 caractérisé en qu'il comporte des moyens pour l'implémentation d'un système d'aide global comportant un noyau (38) pour sélectivement mettre en service les systèmes de services spécialisés et une séquence conçue et arrangée pour qu'après l'initialisation, l'interface transfère la commande à l'un ou l'autre des moteurs de service.

27. Dispositif selon la revendication 18 caractérisé en ce qu'il comporte une base de connaissance descriptive de l'utilisateur et incorporant les informations suivantes :
- identité de l'utilisateur,
- profil de l'utilisateur tel que par exemple son cursus,
- ses acquis vis-à-vis du système et/ou de l'application,
- ses objectifs,
- la tâche qu'il entend réaliser.

28. Dispositif selon la revendicateur 18 caractérisé en ce qu'il comporte une base de connaissances descriptive du système (SYS) incluant les informations sur la configuration du système sur chaque application, sur l'environnement externe du système tel que le bruit, la luminosité de la pièce, sur les événements aux faits antérieurs et sur les opérations précédentes.

29. Dispositif selon la revendication 18 caractérisé en ce qu'il comporte une base de données factuelles ayant les informations suivantes :
- les événements résultant de l'interaction entre l'utilisateur, l'application et/ou le système de service.

30. Dispositif selon la revendication 18 caractérisé en ce qu'il comporte une base de connaissances active et réactive (BCAR) constituée par des fonctions, des règles et des méthodes exécutées comme une fonction de l'état (DE), la base de connaissances descriptive (OPE, SYS) et de la base de connaissances factuel (BF).

31. Dispositif selon la revendication 18 caractérisé en ce que le système d'aide global est réalisé sous la forme d'un microcircuit comportant au moins un des éléments suivants :
- une mémoire morte programmable (PROM) ou équivalente pour constituer un moteur d'inférence de moteur de service,
- une mémoire vive (RAM) de préférence CMOS ou équivalente pour constituer une base de connaissances,
- une mémoire vive (RAM) pour constituer une base de faits,
- une partie interface constituée d'une mémoire morte programmable (PROM) ou équivalente et des circuits permettant les connections nécessaires vers les périphériques du système,
et des moyens pour la mise en oeuvre du système d'aide global réalisés au moyen d'un programme d'initialisation à partir du système d'exploitation (OS).

32. Dispositif selon la revendication 30 caractérisé en ce qu'il comporte une unité centrale auxiliaire, par exemple à microprocesseurs, pour contrôler certains composants du système d'aide global.

33. Dispositif selon la revendication 30 caractérisé en ce qu'il comporte des capteurs physiques additionnels tels que chronomètre et/ou microphone.

## Patentansprüche

1. Verfahren zur Ausbildung eines Systems zur Unterstützung des Benutzers eines Informatiksystems mit einer Zentraleinheit (10), einem zentralen Speicher (12), einer oder mehreren peripheren Eingabe/Ausgabe-Einheiten (22), einem Betriebssystem (OS), einer Datenbank, wenigstens einem Service-Betreiber und wahlweise einem oder mehreren Anwendungs-Softwaremodulen (APP), wobei das Verfahren **dadurch gekennzeichnet** ist, daß in einem globalen Hilfe-System eine Mehrzahl von spezialisierten Service-Systemen (32,34,36) zusammengefaßt werden, die mit einer Schnittstelle (30) verbunden sind, die Analysatoren (42), Geber (44), die von den Service-Betreibern (32) verwendet werden, um Informationen zur laufenden Anwendung (APP), zu dem Informatiksystem oder zu dem Benutzer zu senden, und Sensoren (40) aufweist, die Informationen über die Benutzer/Anwendungs-Interaktionen zu dem in Betrieb befindlichen Service-Betreiber übertragen, wobei die Aktionen des Benutzers und die Interaktion mit der Datenbank der Anwendung erfaßt und registriert werden und die über die Schnittstelle gesammelten Ereignisse durch wenigstens ein spezialisiertes Service-System verarbeitet werden, wobei die Schnittstelle unmittelbar mit der Ebene des Betriebssystems (OS) verbunden ist, um die virtuelle Integration des globalen Hilfe-Systems in dem Betriebssystem (OS) zu ermöglichen, das in einem Sensormodus die Eingabeinformationen und die Benutzer- und Anwendungsinteraktionen sowie im Sendemodus die Ausgaben steuert und die Informationen von dem Benutzer oder der Anwendung des Informatiksystems zu einem spezialisierten Service-System sendet, und wobei jedes spezialisierte Service-System einen Service-Betreiber (M1-MN) wie etwa einen Folgerungsbetreiber oder einen Interpretierer und wenigstens eine Datenbank (36, BCAR, SYS, OPE) enthält, die eine Tatsachenbank (BF) einschließt.

2. Verfahren nach Anspruch 1, **dadurch gekennzeichnet**, daß die Service-Systeme (32,34,36) und die Schnittstelle (30) sternförmig mit einem Kernsystem (38) verbunden sind.

3. Verfahren nach Anspruch 1, **dadurch gekennzeichnet**, daß die Service-Systeme ringnetzförmig verbunden sind, wobei eines der Service-Systeme nach Priorität die Verbindung mit der Schnittstelle sicherstellt.

4. Verfahren nach einem der vorhergehenden Ansprüche, **dadurch gekennzeichnet**, daß die Service-Systeme wenigstens eine gemeinsame Datenbank (34) enthalten, die für jeden der Service-Betreiber (M1) verfügbar und vom Kenntnisdatenbank-Typ (BCAR, SYS, OPE) ist.

5. Verfahren nach einem der vorhergehenden Ansprüche, **dadurch gekennzeichnet**, daß die Datenbank eine einheitliche Datenbank enthält, die aus einer Mehrzahl von allgemeinen einheitlichen, für jeden der Service-Betreiber spezifischen Kenntnisdatenbanken (BCU) zusammengesetzt ist.

6. Verfahren nach Anspruch 4, **dadurch gekennzeichnet**, daß wenigstens eine Kenntnisdatenbank, vorzugsweise eine gemeinsame Kenntnisdatenbank, eine Benutzerbeschreibungs-Kenntnisdatenbank (OPE) und/oder eine Systembeschreibungs-Kenntnisdatenbank (SYS) enthält.

7. Verfahren nach einem der vorhergehenden Ansprüche, **dadurch gekennzeichnet**, daß es den Schritt enthält, die Information zu dem in Betrieb befindlichen Service-Betreiber (M1) und zu der Tatsachenbank (BF) zu senden.

8. Verfahren nach einem der vorhergehenden Ansprüche, **dadurch gekennzeichnet**, daß die aktive Implementierung des globalen Hilfe-Systems entweder durch einen gezielten Aufruf des Benutzers oder durch eine automatische Auslösung durch ein Erfassen von Ereignissen nach dem Versetzen des globalen Hilfe-Systems in einen Bereitschaftszustand erfolgt.

9. Verfahren nach einem der vorhergehenden Ansprüche, **dadurch gekennzeichnet**, daß die Service-Betreiber (M1, MN) nach Hauptfunktionen spezialisiert sind, die insbesondere aus den folgenden ausgewählt sind:
- Verwaltung des Informatiksystems,
- Unterrichtung oder Selbstunterweisung,
- Hilfe bei der Behebung von Störungen.

10. Verfahren nach einem der Ansprüche 1,4,7, **dadurch gekennzeichnet**, daß die Service-Betreiber vom Multitask-Typ (T1-TN), vorzugsweise mit Schleifenbetrieb, sind.

11. Verfahren nach Anspruch 6, **dadurch gekennzeichnet**, daß die Benutzerbeschreibungs-Kenntnisdatenbank die folgenden Informationen enthält:
- Identität des Benutzers,
- Profil des Benutzers wie etwa dessen Laufbahn,
- Erfahrung des Benutzers bezüglich des Systems und/oder der Anwendung,
- Zweck der Selbstunterweisung,
- Aufgaben, die er verwirklichen will.

12. Verfahren nach Anspruch 6, **dadurch gekennzeichnet**, daß die Systembeschreibungs-Kenntnisdatenbank (SYS) Informationen über die Konfiguration des Systems, über jede Anwendung, über die äußere Umgebung des Systems, wie etwa Rauschen und die Helligkeit des Teils, über die vorhergehenden Ereignisse und über die vorhergehenden Operationen enthält.

13. Verfahren nach Anspruch 1 oder 7, **dadurch gekennzeichnet**, daß die Tatsachenbank die folgenden Informationen enthält:
- Ereignisse, die sich aus der Interaktion zwischen dem Benutzer, der Anwendung und/oder dem Service-System ergeben.

14. Verfahren nach einem der Ansprüche 4,6,7,9 bis 13, **dadurch gekennzeichnet**, daß es aktive und reaktive Kenntnisdatenbanken (BCAR) enthält, die durch Funktionen, Regeln oder ausgeführte Methoden wie eine Funktion des Zustands der Beschreibungs-Kenntnis (OPE, SYS)- und Tatsachen (BF)-Datenbanken gebildet sind.

15. Verfahren nach Anspruch 1, **dadurch gekennzeichnet**, daß das spezialisierte Service-System Mittel (AENV) zur Verwaltung der Informatikumgebung enthält.

16. Verfahren nach Anspruch 1, **dadurch gekennzeichnet**, daß das spezialisierte Service-System Mittel (AENS) enthält, um dem Benutzer eine Selbstunterweisung zu erteilen.

17. Verfahren nach Anspruch 1, **dadurch gekennzeichnet**, daß das spezialisierte Service-System Mittel (ARINC) enthält, um die Störungen eines Systems durch den Benutzer zu beheben.

18. Vorrichtung zur Ausbildung eines Systems zur Unterstützung des Benutzers eines Informatiksystems mit wenigstens einer Zentraleinheit (10), einem zentralen Speicher (12), der in einen Festwertspeicher (14) vom ROM-Typ und einen Schreib-Lesespeicher (16) vom RAM-Typ unterteilt ist, einer oder mehreren peripheren Eingabe/Ausgabe-Einheiten (22), einem Betriebssystem (OS), einer Datenbank, einem Service-Betreiber und einem oder mehreren Anwendungs-Softwaremodulen (APP), wobei die Vorrichtung **dadurch gekennzeichnet** ist, daß sie überdies ein globales, eine Mehrzahl von spezialisierten Service-Systemen (32,34,36) umfassendes Hilfe-System und Schnittstellenmittel (30) enthält, die unmittelbar mit der Ebene des Betriebssystems (OS) und mit dem Service-System verbunden sind, um die virtuelle Integration des spezialisierten Service-Systems in dem Informatiksystem zu ermöglichen, wobei das spezialisierte Service-System in Form einer Karte oder eines Moduls mit zusätzlichen Mikroschaltungen verwirklicht ist, die wenigstens eines der folgenden Elemente enthalten:
- einen programmierbaren Festwertspeicher (PROM) oder dergleichen zur Bildung eines Folgerungsbetreibers für einen Service-Betreiber,
- einen Schreib-Lesespeicher (RAM) oder dergleichen zur Bildung einer Tatsachenbank,
- einen Schreib-Lesespeicher (RAM), vorzugsweise vom CMOS-Typ, oder dergleichen zur Bildung einer Kenntnisdatenbank,
- einen Schnittstellenteil, der durch einen programmierbaren Festwertspeicher (PROM) oder dergleichen gebildet ist, und
- Schaltungen, die die erforderlichen Verbindungen zu den peripheren Einheiten des Systems ermöglichen,
wobei die Inbetriebnahme des globalen Hilfe-Systems mittels eines Initialisierungsprogramms ausgehend von dem Betriebssystem erfolgt, und wobei die Schnittstellenmittel zwischen dem spezialisierten Service-System und den Sensoreinrichtungen (40) des Informatikystems die Analysatormittel (42) zum Erfassen und Registrieren der Aktionen des Benutzers und die Gebermittel (44) für die Übertragung der Information entweder zu dem Anwendungsprogramm oder dem Informatiksystem enthalten.

19. Vorrichtung nach dem vorhergehenden Anspruch, **dadurch gekennzeichnet**, daß die Schnittstellenmittel auf der Ebene des Betriebssystems (OS) auf transparente Weise unmittelbar zwischen den Benutzer und die Anwendungsprogramme (APP) geschaltet und im Sensormodus dafür angepaßt sind, die Aktionen des Benutzers und die Interaktionen mit den Anwendungen (APP) zu erfassen.

20. Vorrichtung nach dem vorhergehenden Anspruch, **dadurch gekennzeichnet**, daß sie zentrale Hilfsverarbeitungsmittel enthält, um bestimmte Komponenten des spezialisierten Service zu steuern.

21. Vorrichtung nach Anspruch 18 oder 19, **dadurch gekennzeichnet**, daß die mit der Schnittstelle verbundenen Sensoreinrichtungen einen Chronometer enthalten.

22. Vorrichtung nach Anspruch 18 oder 19, **dadurch gekennzeichnet**, daß die Sensoreinrichtungen ein Mikrophon enthalten.

23. Vorrichtung nach Anspruch 18, **dadurch gekennzeichnet**, daß die Analysemittel einen Interessenanalysator, einen Perplexitätsanalysator, einen Speicherplatzanalysator und einen Kompatibilitätsanalysator enthalten.

24. Vorrichtung nach Anspruch 18, **dadurch gekennzeichnet**, daß die Schnittstelle Geber umfaßt, die einen Menu-Erzeuger, einen Fenster-Erzeuger zur Informationsverarbeitung auf dem Schirm, einen Erzeuger von stationären oder bewegten Bildern auf dem Schirm und einen Ton-Erzeuger enthalten.

25. Vorrichtung nach Anspruch 18 oder 19, **dadurch gekennzeichnet**, daß die Sensormittel einen oder mehrere Tastaturfilter, einen Schirmspeicherleser, einen Mausleser, einen Leuchtstiftleser, einen Schirmtastleser, einen Rauschdetektor, einen lichtempfindlichen Sensor, einen Druckdetektor und einen Signalgenerator enthalten.

26. Vorrichtung nach Anspruch 18 oder 19, **dadurch gekennzeichnet**, daß sie Mittel zur Implementierung eines globalen Hilfe-Systems umfaßt, das einen Kern (38) enthält, um selektiv die spezialisierten Service-Systeme in Betrieb zu setzen, und eine Folgesteuerung aufweist, die so ausgelegt und angeordnet ist, daß nach der Initialisierung die Schnittstelle den Befehl zu dem einen oder dem anderen Service-Betreiber überträgt.

27. Vorrichtung nach Anspruch 18, **dadurch gekennzeichnet**, daß sie eine Benutzerbeschreibungs-Kenntnisdatenbank enthält, die die folgenden Informationen einschließt:
- Identität des Benutzers,
- Profil des Benutzers wie zum Beispiel seine Laufbahn,
- seine Erfahrungen bezüglich des Systems und/oder der Anwendung,
- seine Ziele, und
- die Aufgabe, die er verwirklichen will.

28. Vorrichtung nach Anspruch 18, **dadurch gekennzeichnet**, daß sie eine Systembeschreibungs-Kenntnisdatenbank (SYS) umfaßt, die die Informationen über die Konfiguration des Systems für jede Anwendung, über die externe Umgebung des Systems wie etwa Rauschen sowie die Helligkeit des Teils, über die Ereignisse zu den vorhergehenden Tatsachen und über die vorhergehenden Operationen enthält.

29. Vorrichtung nach Anspruch 18, **dadurch gekennzeichnet**, daß sie eine Tatsachendatenbank umfaßt, die die folgenden Informationen enthält:
- die Ereignisse, die sich aus der Interaktion zwischen dem Benutzer, der Anwendung und/oder dem Service-System ergeben.

30. Vorrichtung nach Anspruch 18, **dadurch gekennzeichnet**, daß sie eine aktive und reaktive Kenntnisdatenbank (BCAR), die durch Funktionen, Regeln und ausgeführte Methoden wie eine Zustandsfunktion (DE), die Beschreibungs-Kenntnisdatenbank (OPE, SYS) und die Tatsachen-Kenntnisdatenbank (BF) gebildet ist.

31. Vorrichtung nach Anspruch 18, **dadurch gekennzeichnet**, daß das globale Hilfe-System in Form einer Mikroschaltung verwirklicht ist, die wenigstens eines der folgenden Elemente enthält:
- einen programmierbaren Festwertspeicher (PROM) oder dergleichen zur Bildung eines Folgerungsbetreibers eines Service-Betreibers,
- einen Schreib-Lesespeicher (RAM), vorzugsweise vom CMOS-Typ, oder dergleichen zur Bildung einer Kenntnisdatenbank,
- einen Schreib-Lesespeicher (RAM) zur Bildung einer Tatsachenbank,
- einen Schnittstellenteil, der aus einem programmierbaren Festwertspeicher (PROM) oder dergleichen und Schaltungen gebildet ist, die die erforderlichen Verbindungen zu den peripheren Einheiten des Systems ermöglichen,
und Mittel zur Inbetriebnahme des globalen Hilfe-Systems, die mittels eines Initialisierungsprogramms ausgehend von dem Betriebssystem (OS) verwirklicht sind.

32. Vorrichtung nach Anspruch 30, **dadurch gekennzeichnet**, daß sie eine Hilfszentraleinheit, zum Beispiel mit Mikroprozessoren, enthält, um bestimmte Komponenten des globalen Hilfe-Systems zu steuern.

33. Vorrichtung nach Anspruch 30, **dadurch gekennzeichnet**, daß sie zusätzliche physische Sensoren wie etwa Chronometer und/oder Mikrophon enthält.

## Claims

1. A method of preparing a system for assisting the user of a computer system of the type comprising a central processing unit (10), a central memory (12), one or more input and/or output peripherals (22), an operating system (OS),a database, at least one service engine and optionally one or more pieces of applications software (APP), the method being characterised by grouping, in a global help system, a plurality of specialised service systems (32, 34, 36) interconnected to an interface (30) having analysers (42), transmitters (44) which are used by the service engines (32) to send information either to the current application APP, or to the computer system, or to the user, and sensors (40) which transmit to the service engine, while in operation, information on user/application interactions, detecting and recording the actions of the user and the interaction with the database of the application, and processing the events gathered through the interface by at least one specialised service system, the interface being connected directly at the level of the operating system (OS) in order to allow the virtual integration of the global help system into the operating system (OS) managing the input information and the user and application interactions in a sensor mode and the outputs in transmitter mode and sending the information from the user or the application of the computer system to a specialised service system, each specialised service system comprising a service engine (M1-MN) such as an inference engine or an interpreter and at least one database (36, BCAR, SYS, OPE) incorporating a fact base (BF).

2. A method according to Claim 1 characterised in that the service systems (32, 34, 36) and the interface (30) have a star-type interconnection with a hub system (38).

3. A method according to Claim 1 characterised in that the service systems are interconnected in a looped network with one of the service systems giving priority to the connection with said interface.

4. A method according to one of the preceding claims, characterised in that the service systems comprise at least one common database (34) which is available to each of the service engines (M1) and is of the knowledge-base type (BCAR, SYS, OPE).

5. A method according to one of the preceding claims, characterised in that the database comprises a unitary database composed of a plurality of unitary general knowledge bases (BCU) specific to each of the service engines.

6. A method according to Claim 4, characterised in that at least one knowledge base, preferably a common knowledge base, comprises a user-descriptive knowledge base (OPE) and/or a system-descriptive knowledge base (SYS).

7. A method according to one of the preceding claims, characterised in that it comprises the stage of sending the information to the service engine (M1) while in operation and to the fact base (BF).

8. A method according to one of the preceding claims, characterised in that the active implementation of the global help system is obtained either when called on by the user for a specific purpose or by automatic triggering on detection of events after the global help system is put on alert.

9. A method according to one of the preceding claims, characterised in that the service engines (M1, MN) are specialised in terms of main functions and are selected in particular from the following:
- computer system administration,
- teaching or self-training,
- troubleshooting.

10. A method according to one of Claims 1, 4, 7, characterised in that the service engines are of the multitasking type (T1-TN), preferably with looped operation.

11. A method according to Claim 6 characterised in that the user-descriptive knowledge base comprises the following information:
- user identity,
- user profile and career path,
- user experience of the system and/or the application,
- objective of self-training,
- tasks he intends to carry out.

12. A method according to Claim 6, characterised in that the system-descriptive knowledge base (SYS) comprises information on the configuration of the system, on each application, on the external environment of the system such as noise and lighting in the room, on preceding events and on preceding operations.

13. A method according to Claim 1 or 7 characterised in that the fact base comprises the following information:
- events resulting from the interaction between the user, the application and/or the service system.

14. A method according to one of Claims 4, 6, 7, 9 to 13, characterised in that it comprises active and reactive knowledge bases (BCAR) constituted by functions, rules or methods executed as a function of the state of the descriptive (OPE, SYS) and factual (BF) knowledge bases.

15. A method according to Claim 1, characterised in that the specialised service system comprises means (AENV) for administrating the computer environment.

16. A method according to Claim 1, characterised in that the specialised service system comprises means (AENS) for supplying self-training for the user.

17. A method according to Claim 1, characterised in that the specialised service system comprises means (ARINC) for the solving of problems in a system by the user.

18. A device for preparing a system for assisting the user of a computer system comprising at least one central processing unit (10), a central memory (12) divided into a ROM-type read-only memory (14) and a RAM-type random access memory (16), one or more input and/or output peripherals (22), an operating system (OS), a database, a service engine and one or more pieces of applications software (APP), the device being characterised in that it further comprises a global help system encompassing a plurality of specialised service systems (32, 34, 36), interface means (30) connected directly at the level of the operating system (OS) and to the service system to allow the virtual integration of the specialised service system into the computer system, said specialised service system is produced in the form of a card or module with additional microcircuits comprising at least one of the following elements:
- a programmable read-only memory (PROM) or equivalent to constitute an inference engine for a service engine,
- a random access memory (RAM) or equivalent to constitute a fact base,
- a random access memory (RAM) preferably (CMOS) or equivalent to constitute a knowledge base,
- an interface portion constituted by a programmable read-only memory (PROM) or equivalent and
- circuits allowing the necessary connections to the peripherals of the system, the implementation of the global help system being carried out by means of an initialisation program starting from the operating system (OS), said interface means comprising, between the specialised service system and the sensor devices (40) of the computer system, the analyser means (42) for detecting and recording the actions of the user and the transmitting means (44) for transmitting the information either to the application program or to the computer system.

19. A device according to the preceding claim characterised in that at the level of the operating system (OS) the interface means are connected directly in a transparent manner between the user and the applications programs (APP)and are suitable in sensor mode for detecting the actions of the user and the interactions with the applications (APP).

20. A device according to the preceding claim characterised in that it comprises central auxiliary processing means for managing certain components of the specialised service.

21. A device according to Claim 18 or 19, characterised in that the sensor devices connected to the interface comprise a chronometer.

22. A device according to Claim 18 or 19, characterised in that the sensor devices comprise a microphone.

23. A device according to Claim 18, characterised in that the analysis means comprise an interest analyser, a perplexity analyser, a memory space analyser and a compatibility analyser.

24. A device according to Claim 18, characterised in that the interface comprises transmitters including a menu generator, a generator of windows for processing information on the screen, a generator of stationary or animated images on the screen, and a direction generator.

25. A device according to Claim 18 or 19, characterised in that the sensor means comprise one or more keyboard filters, a screen memory reader, a mouse reader, a light-pen reader, a touch-screen reader, a noise detector, a light-sensitive sensor, a pressure detector and a signal generator.

26. A device according to Claim 18 or 19, characterised in that it comprises means for implementing a global help system comprising a hub (38) for selectively activating the specialised service systems and a sequence designed and arranged so that, after initialisation, the interface transfers the command to one or other of the service engines.

27. A device according to Claim 18, characterised in that it comprises a user-descriptive knowledge base incorporating the following information:
- user identity,
- user profile such as, for example, his career path,
- his experience of the system and/or the application,
- his objectives,
- the task he intends to carry out.

28. A device according to Claim 18 characterised in that it comprises a system-descriptive knowledge base (SYS) including information on the configuration of the system on each application, on the external environment of the system such as noise and lighting in the room, on events of previous facts and on preceding operations.

29. A device according to Claim 18, characterised in that it comprises a factual database having the following information:
- events resulting from the interaction between the user, the application and/or the service system.

30. A device according to Claim 18, characterised in that it comprises an active and reactive knowledge base (BCAR) constituted by functions, rules and methods executed as a function of the state (DE), the descriptive knowledge base (OPE, SYS) and the factual knowledge base (BF).

31. A device according to Claim 18, characterised in that the global help system is produced in the form of a microcircuit comprising at least one of the following elements:
- a programmable read-only memory (PROM) or equivalent to constitute a service engine inference engine,
- a random access memory (RAM) preferably (CMOS) or equivalent to constitute a knowledge base,
- a random access memory (RAM) to constitute a fact base,
- an interface portion constituted of a programmable read-only memory (PROM) or equivalent and circuits allowing the necessary connections to the peripherals of the system, and means for implementing the global help system produced by means of an initialisation program starting from the operating system (OS).

32. A device according to Claim 30, characterised in that it comprises an auxiliary central processing unit, for example with microprocessors, to control certain components of the global help system.

33. A device according to Claim 30, characterised in that it comprises additional physical sensors such as chronometer and/or microphone.
